# EUROPÄISCHE PATENTSCHRIFT

(11) **EP 3 448 607 B1**
(45) Veröffentlichungstag und Bekanntmachung des Hinweises auf die Patenterteilung: **28.09.2022**
(21) Anmeldenummer: 17720090.4
(22) Anmeldetag: 26.04.2017
(51) Int. Cl.: B23B 31/117, B23B 31/00, B23B 31/107

(54) **SCHRUMPFFUTTER**
SHRINK-FIT CHUCK
MANDRIN À AJUSTEMENT FRETTÉ

(30) Priorität: 27.04.2016 DE 102016005081
(43) Veröffentlichungstag der Anmeldung: 06.03.2019
(73) Patentinhaber: Karl Schüssler GmbH & Co. KG, 72411 Bodelshausen (DE)
(72) Erfinder: SCHÜSSLER, Klaus, 72379 Hechingen-Sickingen (DE)
(74) Vertreter: v. Bezold & Partner Patentanwälte - PartG mbB
(86) Internationale Anmeldenummer: PCT/EP2017/059928
(87) Internationale Veröffentlichungsnummer: WO 2017/186792

(56) Entgegenhaltungen:
- EP-A1- 2 929 964
- WO-A1-2008/097171
- DE-A1-102010 034 889
- DE-A1-102014 208 140
- DE-B3-102014 016 321
- JP-A- H09 267 212
- US-A- 1 958 817
- US-A1- 2005 238 451

## Beschreibung

Die Erfindung betrifft ein Schrumpffutter zum Einspannen eines Gegenstands, insbesondere zum Einspannen eines Werkzeugs in einer Werkzeugmaschine, vorzugsweise zum Einspannen eines Fräsers in einer Fräsmaschine.

Ein derartiges Schrumpffutter ist beispielsweise aus DE 10 2014 016 321 B3 bekannt und weist werkzeugmaschinenseitig eine Standard-Kegelschnittstelle auf, um das Schrumpffutter in der Werkzeugmaschine (z. B. Fräsmaschine) zu montieren.

Werkzeugseitig weist das Schrumpffutter dagegen eine im Wesentlichen zylindrische Aufnahmebohrung auf, in die ein Werkzeugschaft des zu spannenden Werkzeugs (z. B. Fräser) eingeführt werden kann, um dann beim Abkühlen des zuvor erwärmten Schrumpffutters eingespannt zu werden.

Darüber hinaus verfügt das bekannte Schrumpffutter über eine Spannschraube, die in eine Gewindebohrung quer zu der Aufnahmebohrung eingeschraubt werden kann und mit ihrem freien Ende auf eine Spannfläche in der Mantelfläche des Werkzeugschafts wirkt.

Zum einen verhindert die Spannschraube im eingeschraubten Zustand ein axiales Herausziehen des Werkzeugs, da die Spannfläche in der Mantelfläche des Werkzeugschafts leicht geneigt ist, so dass sich der Werkzeugschaft zu seinem freien Ende hin erweitert.

Zum anderen verhindert die Spannschraube im eingeschraubten Zustand aber auch ein Verdrehen des Werkzeugs im eingespannten Zustand, da die Spannschraube bezüglich des Durchmessers der Aufnahmebohrung leicht außermittig angeordnet ist. Wichtig für diese Funktion ist jedoch, dass der Werkzeugschaft in einer geeigneten Winkellage relativ zu der Spannschraube in das Schrumpffutter eingesetzt wird. Bei dem vorstehend beschriebenen bekannten Schrumpffutter kann dies durch eine gefederte Positionierschraube erreicht werden, was jedoch nicht optimal ist.

Zum technischen Hintergrund der Erfindung ist auch hinzuweisen auf DE 94 11 260 U1, DE 10 2014 208 140 A1, DE 20 2014 008 275 U1 DE 20 2011 103 203 U1 und DE 10 2011 081 523 A1. Zum allgemeinen technischen Hintergrund der Erfindung ist hinzuweisen auf EP 2 929 964 A1, WO 2008/097171 A1, US 1,958,817 A, DE 10 2010 034889 A1 und JP H09 267212 A.

Schließlich offenbart US 2005/0238451 A1 ein Schrumpffutter gemäß dem Oberbegriff von Anspruch 1. Dieses bekannte Schrumpffutter ist jedoch noch nicht vollständig befriedigend.

Der Erfindung liegt deshalb die Aufgabe zugrunde, die Winkelpositionierung des Werkzeugschafts beim Einführen in das Schrumpffutter zu verbessern.

Diese Aufgabe wird durch ein erfindungsgemäßes Schrumpffutter gemäß dem Hauptanspruch gelöst.

Zunächst ist zu erwähnen, dass sich das Schrumpffutter allgemein zum Einspannen eines Gegenstandes eignet, wie beispielsweise eines Werkstücks und vorzugsweise eines Werkzeugs. In einem bevorzugten Ausführungsbeispiel handelt es sich bei dem Werkzeug um einen Fräser, der mittels des erfindungsgemäßen Schrumpffutters in einer Fräsmaschine eingespannt werden kann. Die Erfindung ist jedoch hinsichtlich des Typs des Werkzeugs und der Werkzeugmaschine nicht auf Fräsmaschinen beschränkt, sondern grundsätzlich auch mit anderen Typen von Werkzeugmaschinen realisierbar. Weiterhin ist zu erwähnen, dass es sich bei dem zu spannenden Gegenstand nicht notwendigerweise um ein Werkzeug handeln muss. Vielmehr kann beispielsweise auch ein Werkstück oder ein sonstiger Gegenstand mittels des erfindungsgemäßen Schrumpffutters eingespannt werden.

Das erfindungsgemäße Schrumpffutter weist zunächst in Übereinstimmung mit dem Stand der Technik eine im Wesentlichen zylindrische Aufnahmebohrung auf, um einen im Wesentlichen zylindrischen Schaft des zu spannenden Gegenstandes aufzunehmen. Die Aufnahmebohrung für den zu spannenden Gegenstand (z. B. Fräser) verläuft hierbei in dem Schrumpffutter und wird außen durch eine Wandung begrenzt.

Die Erfindung zeichnet sich nun durch eine Rippe aus, die quer zur Längsachse der Aufnahmebohrung in dem Schrumpffutter verläuft und von der Wandung der Aufnahmebohrung nach innen in die Aufnahmebohrung hineinragt, so dass die Rippe das vollständige Einführen des Schafts in die Aufnahmebohrung nur in einer bestimmten Winkelstellung des Schafts ermöglicht. Bei einem Einspannvorgang wird also zunächst das Schrumpffutter erwärmt, damit sich die Aufnahmebohrung erweitert. Anschließend wird der zu spannende Gegenstand dann axial in die Aufnahmebohrung des Schrumpffutters eingeführt, wobei die Winkelstellung des Gegenstands zunächst keine Rolle spielt. Beim Einführen des Gegenstands in die Aufnahmebohrung stößt das freie Ende des Gegenstands dann schließlich gegen die Rippe, was zunächst ein weiteres axiales Einführen des Gegenstands verhindert. Der Gegenstand wird dann von der Bedienungsperson so gedreht, dass die Rippe in der Aufnahmebohrung einerseits und die Spannfläche in der Mantelfläche des zu spannenden Gegenstands andererseits parallel ausgerichtet sind, woraufhin die Rippe dann das weitere Einführen des zu spannenden Gegenstands nicht mehr blockiert. Der zu spannende Gegenstand wird dann schließlich vollständig in die Aufnahmebohrung eingeführt, bis er an einem Anschlag (z. B. Boden, Absatz, Längeneinstellschraube) in der Aufnahmebohrung anschlägt.

Das erfindungsgemäße Schrumpffutter weist auch eine Gewindebohrung auf, welche die Wandung der Aufnahmebohrung vollständig durchsetzt und quer zur Längsachse der Aufnahmebohrung verläuft, wie es an sich aus DE 10 2014 016 321 B3 bekannt ist. In diese Gewindebohrung kann eine Spannschraube eingeschraubt werden, die im eingeschraubten Zustand mit ihrem freien Ende auf die Spannfläche in der Mantelfläche des Schafts des zu spannenden Gegenstands wirkt und dadurch ein axiales Herausziehen des Gegenstands verhindert, da die Spannfläche in der Mantelfläche des Schafts leicht zur Längsachse des Schafts geneigt ist, so dass sich der Schaft zu seinem freien Ende hin erweitert. Im herausgeschraubten Zustand wirkt die Spannschraube dagegen nicht auf die Spannfläche und ermöglicht dadurch ein axiales Herausziehen des Gegenstands aus dem Schrumpffutter.

Gemäß der Erfindung hat die Spannschraube jedoch noch eine weitere Funktion. So soll die Spannschraube nicht nur ein axiales Herausziehen des zu spannenden Gegenstands aus dem Schrumpffutter verhindern, sondern auch eine Verdrehung des zu spannenden Gegenstands um seine Längsachse verhindern. Die Gewindebohrung für die Spannschraube ist deshalb in Bezug auf den Durchmesser der Aufnahmebohrung außermittig angeordnet und verläuft somit in Bezug auf die Längsachse der Aufnahmebohrung nicht exakt radial. Dies bietet den Vorteil, dass die Spannschraube auf die Spannfläche nicht mittig wirkt, sondern außermittig, so dass die Spannschraube dem zu spannenden Gegenstand ein Drehmoment entgegensetzen kann, um ein Verdrehen des zu spannenden Gegenstands in dem Schrumpffutter
zu verhindern. Die Gewindebohrung für die Spannschraube verläuft vorzugsweise in einer Ebene, die rechtwinklig zur Längsachse der Aufnahmebohrung liegt. Hierbei ist zu erwähnen, dass die Gewindebohrung mit der Längsachse die Längsachse der Aufnahmebohrung nicht schneidet. Die Längsachse der Gewindebohrung einerseits und die Längsachse der Aufnahmebohrung andererseits sind also vorzugsweise im mathematischen Sinne windschief, d. h. sie liegen nicht in einer Ebene und sind nicht parallel. Der lotrechte Abstand zwischen der Längsachse der Gewindebohrung für die Spannschraube einerseits und dem Durchmesser der Aufnahmebohrung andererseits liegt vorzugsweise im Bereich von 1 mm bis 5 mm oder 2 mm bis 4 mm.

Ferner ist zu erwähnen, dass die Rippe vorzugsweise innen eine gerade Kante aufweist, die quer zur Längsachse der Aufnahmebohrung verläuft. Die geneigte Spannfläche in der Mantelfläche des zu spannenden Gegenstands ist vorzugsweise ebenfalls im Wesentlichen eben. Bei einer korrekten Winkelausrichtung des zu spannenden Gegenstands in Bezug auf das Schrumpffutter verläuft die gerade Kante der Rippe also im Wesentlichen parallel zu der ebenen Spannfläche, was es erlaubt, den zu spannenden Gegenstand vollständig in die Aufnahmebohrung des Schrumpffutters einzuführen, bis der zu spannende Gegenstand mit seinem freien Ende an einem Anschlag (z. B. Boden, Absatz, Längeneinstellschraube) in der Aufnahmebohrung anschlägt.

Weiterhin ist zu erwähnen, dass die Rippe von der Mündung der Aufnahmebohrung aus betrachtet vorzugsweise hinter der Gewindebohrung für die Spannschraube angeordnet ist. Die Rippe befindet sich also vorzugsweise in axialer Richtung zwischen dem Boden der Aufnahmebohrung einerseits und der Gewindebohrung andererseits. Allerdings kann die Rippe auch in einer anderen axialen Position angeordnet sein.

Es wurde bereits vorstehend erwähnt, dass die Spannfläche an dem zu spannenden Gegenstand vorzugsweise ein axiales Herausziehen des Gegenstands aus dem Schrumpffutter verhindert, wenn die Spannschraube in die zugehörige Gewindebohrung eingeschraubt ist. Hierfür ist die Spannfläche in der Mantelfläche des Schafts des zu spannenden Gegenstands gegenüber der Längsachse des Schafts um einen bestimmten Neigungswinkel geneigt, wobei dieser Neigungswinkel beispielsweise im Bereich von 1°-10°, 1°-6°, 1°-4° oder 1°-3° liegen kann. In dem bevorzugten Ausführungsbeispiel der Erfindung ist dieser Neigungswinkel gleich 2°.

Ferner ist zu erwähnen, dass sich die geneigte Spannfläche an dem Schaft über eine bestimmte axiale Länge erstreckt. Grundsätzlich ist eine derartige geneigte Spannfläche auch unter der Bezeichnung Whistle-Notch-Spannfläche bekannt und in der technischen Norm DIN 1835 normiert. Bei dem erfindungsgemäßen Schrumpffutter ist diese Spannfläche jedoch in axialer Richtung vorzugsweise verkürzt und vorzugsweise in Richtung des Schaftendes verschoben. Die geneigte Spannfläche kann also beispielsweise eine axiale Länge im Bereich von 5 mm bis 40 mm, 5 mm bis 35 mm, 5 mm bis 30 mm, 10 mm bis 25 mm, 15 mm bis 22 mm, 17 mm bis 21 mm, 18 mm bis 21 mm oder 19 mm bis 21 mm aufweisen. In dem bevorzugten Ausführungsbeispiel der Erfindung ist die Länge der geneigten Spannfläche 20 mm.

Bei dem bevorzugten Ausführungsbeispiel erstreckt sich die geneigte Spannfläche an dem Schaft jedoch in axialer Richtung bis an das freie Ende des Schafts oder zumindest bis zu einer Fase an dem freien Ende des Schafts. Zwischen der geneigten Spannfläche einerseits und dem freien Ende des Schafts liegt also bei dem bevorzugten Ausführungsbeispiel kein zylindrischer Bereich der Mantelfläche des Schafts.

Ferner ist zu erwähnen, dass die Aufnahmebohrung in dem Schrumpffutter einen axialen Anschlag aufweist, der beim Einschieben des zu spannenden Gegenstands eine axiale Begrenzung darstellt. Beispielsweise kann es sich bei diesem axialen Anschlag um den Boden der Aufnahmebohrung, einen Absatz in der Aufnahmebohrung oder eine Längeneinstellschraube handeln. In dem bevorzugten Ausführungsbeispiel der Erfindung ist die Gewindebohrung für die Spannschraube in einem bestimmten axialen Abstand zu diesem axialen Anschlag in der Aufnahmebohrung angeordnet. Die axiale Länge der Spannfläche in der Mantelfläche des zu spannenden Gegenstands ist dann vorzugsweise größer als der axiale Abstand der Gewindebohrung zu dem Anschlag in der Aufnahmebohrung. Dies ist wichtig, damit die Spannschraube im eingeschraubten Zustand auf die geneigte Spannfläche trifft, wenn der zu spannende Gegenstand vollständig bis zu dem Anschlag in die Aufnahmebohrung in dem Schrumpffutter eingeschoben ist.

Es wurde bereits vorstehend erwähnt, dass die Rippe in der Aufnahmebohrung zusammen mit der geneigten Spannfläche eine Winkelpositionierung des zu spannenden Gegenstands ermöglicht. So kann der zu spannende Gegenstand nur dann vollständig in die Aufnahmebohrung eingeschoben werden, wenn der zu spannende Gegenstand in Bezug auf die Spannschraube korrekt positioniert ist. Vorzugsweise ermöglicht die Rippe in Zusammenwirkung mit der Spannfläche hierbei eine bestimmte Winkelpositionierungstoleranz, innerhalb derer ein Einschieben des zu spannenden Gegenstands in das Schrumpffutter vollständig möglich ist. Diese Winkelpositionierungstoleranz liegt vorzugsweise im Bereich von 1°-10°, 2°-5° oder 2°-3°.

Ferner ist zu erwähnen, dass die Spannschraube mit ihrem freien Ende unmittelbar auf die Spannfläche des Schafts drücken kann.

Es besteht jedoch alternativ auch die Möglichkeit, dass die Spannschraube mittelbar auf die Spannfläche des Schafts drückt, wobei zwischen dem freien Ende der Spannschraube und der Spannfläche ein Zwischenelement (z. B. eine drehbare, abgeflachte Kugel) angeordnet ist, wie es beispielsweise aus Z DE 10 2014 016 321 B3 bekannt ist. Schließlich ist noch zu erwähnen, dass die Erfindung nicht nur Schutz beansprucht für das vorstehend beschriebene erfindungsgemäße Schrumpffutter als einzelnes Bauteil. Vielmehr beansprucht die Erfindung auch Schutz für eine Werkzeugmaschine (z. B. Fräsmaschine), die mit einem derartigen erfindungsgemäßen Schrumpffutter ausgestattet ist.

Andere vorteilhafte Weiterbildungen der Erfindung sind in den Unteransprüchen gekennzeichnet oder werden nachstehend zusammen mit der Beschreibung des bevorzugten Ausführungsbeispiels der Erfindung anhand der Figuren näher erläutert. Es zeigen:

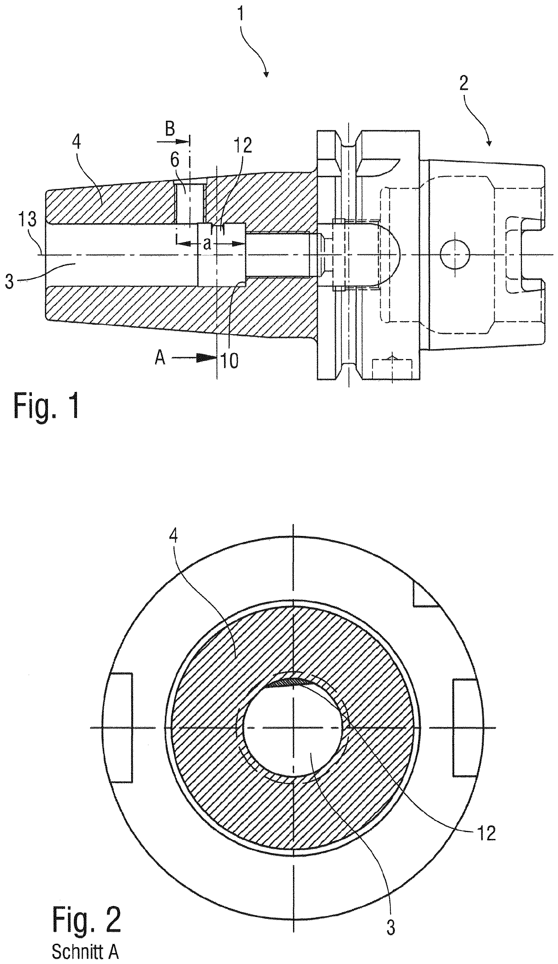

- Figur 1: eine Längsschnittansicht durch ein erfindungsgemäßes Schrumpffutter,
- Figur 2: eine Querschnittsansicht durch das Schrumpffutter gemäß Figur 1 entlang der Schnittlinie A,

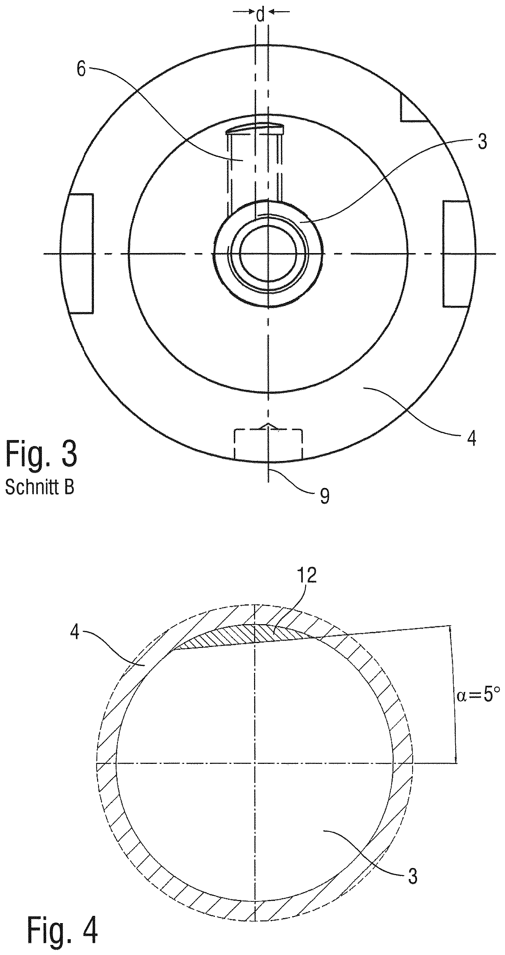

- Figur 3: eine Querschnittsansicht durch das Schrumpffutter gemäß Figur 1 entlang der Schnittlinie B,
- Figur 4: eine Querschnittsansicht durch Figur 1 im Bereich der Rippe,
- Figur 5: eine Perspektivansicht eines Werkzeugschafts zum Spannen in dem Schrumpffutter,
- Figur 6: eine Seitenansicht des Werkzeugschafts aus Figur 5, sowie
- Figur 7: eine Frontansicht des Werkzeugschafts aus den Figuren 5 und 6 zum freien Ende des Werkzeugschafts her.

Die Zeichnungen zeigen ein erfindungsgemäßes Schrumpffutter 1, das mittels einer Standard-Kegelschnittstelle 2 in einer Werkzeugmaschine (z. B. Fräsmaschine) montiert werden kann, wie es an sich beispielsweise aus DE 20 2014 016 321 B3 bekannt ist.

Werkzeugseitig weist das erfindungsgemäße Schrumpffutter 1 eine zylindrische Aufnahmebohrung 3 auf, die von einer Wandung 4 begrenzt ist.

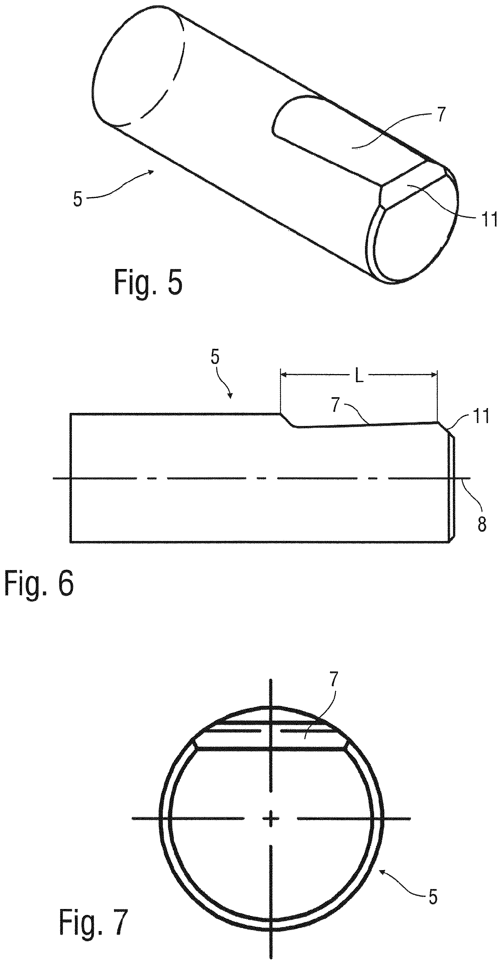

In die Aufnahmebohrung 3 des Schrumpffutters 1 kann ein Werkzeugschaft 5 eines Werkzeugs (z. B. Fräser) eingeführt werden, wobei der Werkzeugschaft 5 in den Figuren 5-7 dargestellt ist.

Die Wandung 4 des Schrumpffutters 1 wird von einer Gewindebohrung 6 vollständig durchsetzt, wobei in die Gewindebohrung 6 eine nicht dargestellte Spannschraube eingeschraubt werden kann, wie es an sich aus DE 10 2014 016 321 B3 bekannt ist.

Zum einen verhindert die Spannschraube in der Gewindebohrung 6 im eingeschraubten Zustand ein axiales Herausziehen des Werkzeugschafts 5. Hierzu wirkt die Spannschraube im eingeschraubten Zustand auf eine geneigte Spannfläche 7 in der Mantelfläche des Werkzeugschafts 5. Die Spannfläche 7 ist hierbei gegenüber einer Längsachse 8 um einen Winkel von 2° geneigt, so dass sich der Werkzeugschaft 5 im Bereich der Spannfläche 7 zu seinem freien Ende hin erweitert. Durch das Zusammenwirken der Spannschraube in der Gewindebohrung 6 einerseits mit der Spannfläche 7 andererseits wird verhindert, dass der Werkzeugschaft 5 in axialer Richtung aus dem Schrumpffutter 1 herausgezogen werden kann.

Zum anderen hat die Spannschraube in der Gewindebohrung 6 aber auch noch eine zweite Funktion. So verhindert die in die Gewindebohrung 6 eingeschraubte Spannschraube, dass sich der Werkzeugschaft 5 in der Aufnahmebohrung 3 bei einer mechanischen Belastung verdrehen kann. Hierzu setzt die in die Gewindebohrung 6 eingeschraubte Spannschraube dem Werkzeugschaft 5 ein Drehmoment entgegen, welches ein Durchrutschen des Werkzeugschafts 5 verhindert. Zur Erreichung dieser Funktion ist die Gewindebohrung 6 in der Wandung 4 bezüglich eines Durchmessers 9 der Aufnahmebohrung 3 außermittig angeordnet und zwar in einem lotrechten Abstand d=2 mm. Diese außermittige Anordnung der Gewindebohrung 6 für die Spannschraube ermöglicht es, dass die Spannschraube im eingeschraubten Zustand einen Winkelanschlag bilden kann, der ein Verdrehen des Werkzeugschafts 5 in der Aufnahmebohrung 3 verhindert.

Weiterhin ist zu erwähnen, dass das Schrumpffutter 1 am Ende der Aufnahmebohrung 3 einen Absatz 10 aufweist, der einen axialen Anschlag für den Werkzeugschaft 5 bildet. Darüber hinaus ist auch eine Längeneinstellschraube vorgesehen, die einen axialen Anschlag bildet. Der Werkzeugschaft 5 kann also in axialer Richtung nur soweit in die Aufnahmebohrung 3 eingeführt werden, bis der Werkzeugschaft 5 mit seinem freien Ende an dem Absatz 10 bzw. der Längeneinstellschraube anstößt.

Hierbei ist zu erwähnen, dass die Gewindebohrung 6 für die Spannschraube in einem bestimmten axialen Abstand a zu dem Absatz 10 angeordnet ist. Die Spannfläche 7 in der Mantelfläche des Werkzeugschafts 5 weist eine entsprechende axiale Länge L auf. Wichtig ist hierbei, dass die axiale Länge L der Spannfläche des Werkzeugschafts 5 größer ist als der Abstand a zwischen der Gewindebohrung 6 und dem Absatz 10 in der Aufnahmebohrung 3. Dies ist wichtig, damit die Spannschraube in der Aufnahmebohrung 6 mit ihrem freien Ende auf die Spannfläche 7 in der Mantelfläche des Werkzeugschafts 5 wirken kann.

Ferner ist noch zu erwähnen, dass der Werkzeugschaft 5 an seinem freien Ende eine Fase 11 aufweist. Die Fase 11 befindet sich hierbei zwischen der geneigten Spannfläche 7 und dem freien Ende des Werkzeugschafts 5. Wichtig ist hierbei, dass die geneigte Spannfläche 7 bis zu der Fase 11 heranreicht, ohne dass zwischen der geneigten Spannfläche 7 und dem freien Ende des Werkzeugschafts 5 ein zylindrischer Abschnitt verbleibt.

In der Aufnahmebohrung 3 ist an die Wandung 4 der Aufnahmebohrung 3 innen eine Rippe 12 angeformt, die rechtwinklig zur Längsachse 13 der Aufnahmebohrung 3 verläuft und nach innen in den freien Querschnitt der Aufnahmebohrung 3 hineinragt. Die Rippe 12 weist hierbei eine gerade Kante auf, was eine Winkelpositionierung des Werkzeugschafts 5 relativ zu der Rippe 12 ermöglicht.

Bei einem Einspannvorgang wird das Schrumpffutter 1 zunächst in herkömmlicher Weise erwärmt, wodurch sich die Aufnahmebohrung 3 aufweitet, was dann ein Einschieben des Werkzeugschafts 5 ermöglicht.

Der Werkzeugschaft 5 wird dann in axialer Richtung in die aufgeweitete Aufnahmebohrung 3 eingeschoben, bis der Werkzeugschaft 5 mit seinem freien Ende gegen die Rippe 12 stößt.

Anschließend wird der Werkzeugschaft 5 dann von der Bedienungsperson um seine Längsachse 8 so lange gedreht, bis die gerade Kante der Rippe 12 parallel zu der Spannfläche 7 in der Mantelfläche des Werkzeugschafts 5 ausgerichtet ist. In dieser Winkelstellung kann der Werkzeugschaft 5 dann weiter in die Aufnahmebohrung 3 eingeführt werden, bis der Werkzeugschaft 5 schließlich mit seinem freien Ende an dem Absatz 10 in der Aufnahmebohrung 3 bzw. an der Längeneinstellschraube anschlägt.

Daraufhin kann dann das Schrumpffutter 1 abgekühlt werden, bevor die Spannschraube in die Gewindebohrung 6 eingeschraubt wird, bis die Spannschraube dann mit ihrem freien Ende auf die Spannfläche 7 in der Mantelfläche des Werkzeugschafts 5 wirkt.

Zum einen verhindert die eingeschraubte Spannschraube dann im Zusammenwirken mit der geneigten Spannfläche 7 ein axiales Herausziehen des Werkzeugschafts 5 aus dem Schrumpffutter 1.

Zum anderen verhindert die eingeschraubte Spannschraube aber auch ein Durchrutschen des Werkzeugschafts 5, das durch eine Drehmomentbelastung hervorgerufen werden könnte. Wichtig für diese Funktion ist eine bestimmte Winkelausrichtung des Werkzeugschafts 5 in Bezug auf die Spannschraube bzw. die Gewindebohrung 6. Diese korrekte Winkelausrichtung wird durch die erfindungsgemäße Rippe 12 erreicht.

Die Erfindung ist nicht auf das vorstehend beschriebene bevorzugte Ausführungsbeispiel beschränkt. Vielmehr ist eine Vielzahl von Varianten und Abwandlungen möglich, die ebenfalls in den durch den Hauptanspruch definierten Schutzbereich fallen.

### Bezugszeichenliste:

- 1: Schrumpffutter
- 2: Standard-Kegelschnittstelle zur Montage in einer Werkzeugmaschine
- 3: Aufnahmebohrung für Werkzeugschaft
- 4: Wandung der Aufnahmebohrung
- 5: Werkzeugschaft
- 6: Gewindebohrung für Spannschraube
- 7: Spannfläche in der Mantelfläche des Werkzeugschafts
- 8: Längsachse des Werkzeugschafts
- 9: Durchmesser der Aufnahmebohrung
- 10: Absatz in der Aufnahmebohrung
- 11: Fase am Ende des Werkzeugschafts
- 12: Rippe in der Aufnahmebohrung
- 13: Längsachse der Aufnahmebohrung
- d: Abstand zwischen Längsachse der Gewindebohrung und Durchmesser der Aufnahmebohrung
- L: Axiale Länge der Spannfläche
- a: Abstand zwischen Gewindebohrung und Anschlag in der Aufnahmebohrung

## Patentansprüche

1. Schrumpffutter (1) zum Einspannen eines Gegenstands, insbesondere zum Einspannen eines Werkzeugs in einer Werkzeugmaschine, vorzugsweise zum Einspannen eines Fräsers in einer Fräsmaschine, mit
a) einer im Wesentlichen zylindrischen Aufnahmebohrung (3) zur Aufnahme eines im Wesentlichen zylindrischen Schafts (5) des zu spannenden Gegenstands, wobei die Aufnahmebohrung (3) in dem Schrumpffutter (1) verläuft und außen durch eine Wandung (4) begrenzt ist,
b) einer Gewindebohrung (6),
b1) welche die Wandung (4) der Aufnahmebohrung (3) vollständig durchsetzt und quer zur Längsachse (13) der Aufnahmebohrung (3) verläuft,
b2) wobei die Gewindebohrung (6) in Bezug auf den Durchmesser der Aufnahmebohrung (3) außermittig angeordnet ist und somit in Bezug auf die Längsachse der Gewindebohrung (6) nicht exakt radial verläuft, und
c) einer Spannschraube, die in der Gewindebohrung (6) verschraubbar ist,
c1) wobei die Spannschraube im eingeschraubten Zustand mit ihrem freien Ende auf eine Spannfläche (7) in der Mantelfläche des Schafts (5) wirken kann und dadurch ein axiales Herausziehen des Gegenstands verhindern kann,
c2) wohingegen die Spannschraube im herausgeschraubten Zustand nicht auf die Spannfläche (7) des Schafts (5) wirken kann und dadurch ein axiales Herausziehen des Gegenstands ermöglicht,
**gekennzeichnet durch**
d) eine Rippe (12), die quer zur Längsachse (13) der Aufnahmebohrung (3) verläuft und von der Wandung (4) der Aufnahmebohrung (3) nach innen in die Aufnahmebohrung (3) hineinragt, so dass die Rippe (12) das vollständige Einführen des Schafts (5) in die Aufnahmebohrung (3) nur in einer bestimmten Winkelstellung des Schafts (5) ermöglicht.

2. Schrumpffutter (1) nach Anspruch 1,
**dadurch gekennzeichnet,**
a) **dass** die Gewindebohrung (6) in einer Ebene verläuft, die rechtwinklig zur Längsachse (13) der Aufnahmebohrung (3) liegt, und/oder
b) **dass** der lotrechte Abstand (d) zwischen der Längsachse der Gewindebohrung (6) und dem Durchmesser der Aufnahmebohrung (3) größer als 1 mm oder 2 mm und/oder kleiner als 5 mm, 4 mm ist.

3. Schrumpffutter (1) nach einem der vorhergehenden Ansprüche, **dadurch gekennzeichnet, dass** die Rippe (12) innen eine gerade Kante aufweist, die quer zur Längsachse (13) der Aufnahmebohrung (3) verläuft.

4. Schrumpffutter (1) nach einem der vorhergehenden Ansprüche, **dadurch gekennzeichnet, dass** die Rippe (12) von der Mündung der Aufnahmebohrung (3) aus betrachtet hinter der Gewindebohrung (6) für die Spannschraube angeordnet ist.

5. Schrumpffutter (1) nach einem der vorhergehenden Ansprüche, **dadurch gekennzeichnet,**
a) **dass** die Aufnahmebohrung (3) einen axialen Anschlag (10), insbesondere einen Boden, einen Absatz (10) oder eine Längeneinstellschraube, aufweist, bis zu dem der Schaft (5) des zu spannenden Gegenstands in die Aufnahmebohrung (3) eingeschoben werden kann, und
b) **dass** die Gewindebohrung (6) für die Spannschraube in einem bestimmten axialen Abstand (a) zu dem axialen Anschlag (10) in der Aufnahmebohrung (3) angeordnet ist, und
c) **dass** die axiale Länge (L) der Spannfläche (7) an dem zu spannenden Gegenstand größer sein kann als der axiale Abstand
(a) der Gewindebohrung (6) zu dem Anschlag (10) in der Aufnahmebohrung (3).

6. Werkzeugmaschine, insbesondere Fräsmaschine, mit einem Schrumpffutter (1) nach einem der vorhergehenden Ansprüche.

## Claims

1. Shrink-fit chuck (1) for clamping an object, in particular for clamping a tool in a machine tool, preferably for clamping a milling cutter in a milling machine, having
a) a substantially cylindrical receiving bore (3) for receiving a substantially cylindrical shank (5) of the object to be clamped, the receiving bore (3) extending in the shrink-fit chuck (1) and being bounded externally by a wall (4),
b) a threaded bore (6),
b1) which passes completely through the wall (4) of the receiving bore (3) and extends transversely to the longitudinal axis (13) of the receiving bore (3),
b2) wherein the threaded bore (6) is arranged eccentrically with respect to the diameter of the receiving bore (3) and thus does not extend exactly radially with respect to the longitudinal axis of the threaded bore (6), and
c) a clamping screw which can be screwed into the threaded bore (6),
c1) wherein the clamping screw, in the screwed-in state, can act with its free end on a clamping surface (7) in the circumferential surface of the shank (5) and thereby prevents axial withdrawal of the object,
c2) whereas in the unscrewed state the clamping screw cannot not act on the clamping surface (7) of the shank (5) and thus enables axial withdrawal of the object,
**characterized by**
d) a rib (12) which extends transversely to the longitudinal axis (13) of the receiving bore (3) and projects inwards from the wall (4) of the receiving bore (3) into the receiving bore (3), so that the rib (12) enables the shaft (5) to be completely inserted into the receiving bore (3) only in a specific angular position of the shaft (5).

2. Shrink-fit chuck (1) according to claim 1, **characterised in that**
a) **in that** the threaded bore (6) extends in a plane which lies at right angles to the longitudinal axis (13) of the receiving bore (3), and/or
b) that the perpendicular distance (d) between the longitudinal axis of the threaded bore (6) and the diameter of the receiving bore (3) is greater than 1 mm or 2 mm and/or less than 5 mm, 4 mm.

3. Shrink-fit chuck (1) according to one of the preceding claims, **characterised in that** the rib (12) has inside a straight edge which runs transversely to the longitudinal axis (13) of the receiving bore (3).

4. Shrink-fit chuck (1) according to one of the preceding claims, **characterized in that** the rib (12) is arranged behind the threaded bore (6) for the clamping screw when viewed from the mouth of the receiving bore (3).

5. Shrink-fit chuck (1) according to one of the preceding claims, **characterised in that,**
a) the receiving bore (3) has an axial stop (10), in particular a bottom, a shoulder (10) or a length adjusting screw, up to which the shank (5) of the object to be clamped can be pushed into the receiving bore (3), and
b) **in that** the threaded bore (6) for the clamping screw is arranged at a specific axial distance (a) from the axial abutment (10) in the receiving bore (3), and
c) **in that** the axial length (L) of the clamping surface (7) on the object to be clamped can be greater than the axial distance (a) between the threaded bore (6) and the stop (10) in the receiving bore (3).

6. Machine tool, in particular milling machine, with a shrink-fit chuck (1) according to one of the preceding claims.

## Revendications

1. Mandrin à ajustement fretté (1) destiné à enserrer un objet, en particulier destiné à enserrer un outil dans une machine-outil, de préférence destiné à enserrer une fraise dans une fraiseuse, avec
a) un alésage de réception (3) sensiblement cylindrique destiné à recevoir une tige (5) sensiblement cylindrique de l'objet à serrer, dans lequel l'alésage de réception (3) s'étend dans le mandrin à ajustement fretté (1) et est délimité à l'extérieur par une paroi (4),
b) un alésage fileté (6),
b1) lequel traverse totalement la paroi (4) de l'alésage de réception (3) et s'étend de manière transversale par rapport à l'axe longitudinal (13) de l'alésage de réception (3),
b2) dans lequel l'alésage fileté (6) est disposé de manière excentrée par rapport au diamètre de l'alésage de réception (3) et ne s'étend pas ainsi exactement radialement par rapport à l'axe longitudinal de l'alésage fileté (6),
c) une vis de serrage, qui peut être vissée dans l'alésage fileté (6),
c1) dans lequel la vis de serrage peut agir, dans l'état vissé, par son extrémité libre, sur une surface de serrage (7) dans la surface enveloppante de la tige (5) et peut empêcher ainsi une sortie axiale de l'objet,
c2) alors que la vis de serrage ne peut pas agir, dans l'état dévissé, sur la surface de serrage (7) de la tige (5) et permet ainsi une sortie axiale de l'objet,
**caractérisé par**
d) une nervure (12), qui s'étend de manière transversale par rapport à l'axe longitudinal (13) de l'alésage de réception (3) et dépasse vers l'intérieur dans l'alésage de réception (3) depuis la paroi (4) de l'alésage de réception (3) de telle sorte que la nervure (12) permet d'introduire totalement la tige (5) dans l'alésage de réception (3) seulement dans une position angulaire définie de la tige (5).

2. Mandrin à ajustement fretté (1) selon la revendication 1,
**caractérisé en ce**
a) **que** l'alésage fileté (6) s'étend dans un plan, qui se situe à angle droit par rapport à l'axe longitudinal (13) de l'alésage de réception (3), et/ou
b) **que** la distance verticale (d) entre l'axe longitudinal de l'alésage fileté (6) et le diamètre de l'alésage de réception (3) est supérieure à 1 mm ou à 2 mm et/ou est inférieure à 5 mm, 4 mm.

3. Mandrin à ajustement fretté (1) selon l'une quelconque des revendications précédentes, **caractérisé en ce que** la nervure (12) présente à l'intérieur une arête rectiligne, qui s'étend de manière transversale par rapport à l'axe longitudinal (13) de l'alésage de réception (3).

4. Mandrin à ajustement fretté (1) selon l'une quelconque des revendications précédentes, **caractérisé en ce que** la nervure (12) est disposée, vue depuis l'embouchure de l'alésage de réception (3), derrière l'alésage fileté (6) pour la vis de serrage.

5. Mandrin à ajustement fretté (1) selon l'une quelconque des revendications précédentes, **caractérisé en ce**
a) **que** l'alésage de réception (3) présente une butée axiale (10), en particulier un fond, un gradin (10) ou une vis de réglage longitudinal, jusqu'à laquelle la tige (5) de l'objet à serrer peut-être enfilée dans l'alésage de réception (3), et
b) **que** l'alésage fileté (6) pour la vis de serrage est disposé à une certaine distance axiale (a) par rapport à la butée (10) axiale dans l'alésage de réception (3), et
c) **que** la longueur axiale (L) de la surface de serrage (7) sur l'objet à serrer peut-être plus grande que la distance axiale (a) de l'alésage fileté (6) par rapport à la butée (10) dans l'alésage de réception (3).

6. Machine-outil, en particulier fraiseuse, avec un mandrin à ajustement fretté (1) selon l'une quelconque des revendications précédentes.
